# EUROPEAN PATENT APPLICATION

(11) **EP 3 184 210 A1**
(43) Date of publication of application: **28.06.2017**
(21) Application number: 16204326.9
(22) Date of filing: 15.12.2016
(51) Int. Cl.: B22F 3/15, B22F 7/06, B22F 5/10, B23K 20/02, B21K 1/76, C22C 32/00, F16C 7/02, B23K 101/06, C22C 47/20, C22C 49/11

(54) **A METHOD OF MANUFACTURING A METAL MATRIX REINFORCED COMPOSITE COMPONENT AND A COMPOSITE COMPONENT FORMED BY THE METHOD**

(30) Priority: 22.12.2015 GB 201522624
(71) Applicant: Rolls-Royce plc, London SW1E 6AT (GB)
(72) Inventor: Doorbar, Phillip, Derby, Derbyshire DE24 8BJ (GB); Friend, Gareth, Derby, Derbyshire DE24 8BJ (GB); Udall, Kenneth, Derby, Derbyshire DE24 8BJ (GB)
(74) Representative: Rolls-Royce plc

(57) **Abstract**

A method of manufacturing a metal matrix composite component comprises the steps of:
providing a first tubular member having a first end and an opposite second end, the first end of the first tubular member being formed as a first end block;
positioning a metal matrix composite tubular member concentrically over the first tubular member;
positioning a second tubular member concentrically over the metal matrix composite tubular member, the second tubular member having a first end and an opposite second end, the second end of the second tubular member being formed as a second end block;
welding the first end of the first tubular member to the first end of the second tubular member, and the second end of the first tubular member to the second end of the second tubular member, to join the first tubular member to the second tubular member and thereby to form a metal matrix composite preform; and
consolidating the metal matrix composite preform by a hot isostatic pressing process to form the metal matrix composite component.

## Description

### Field of the Disclosure

The present disclosure relates to a method of manufacturing a fibre reinforced composite component and particularly, but not exclusively, to a method of manufacturing a metal matrix fibre reinforced composite component.

### Background to the Disclosure

It is well known to use thrust strut components in an aerospace gas turbine engine to connect the core gas turbine engine to a rear outer structure. The purpose of a thrust strut is to transmit reactive loads between the core engine and the rear outer structure.

Conventionally, a thrust strut may be formed by a number of manufacturing techniques.

For example, the thrust strut may be machined from a solid forged bar, with integral end fittings. This approach is costly and becomes very weight inefficient as the size of the thrust strut increases.

Alternatively, the thrust strut may be formed from an extruded bar, a flow formed tube, or a formed sheet wrapped and welded into a tube, onto which end fittings are welded. These techniques require expensive fabrication processes, particularly since they require hollow geometries for larger sizes of thrust strut.

As a further alternative, the thrust strut may be formed from a polymeric composite wrapped tube having metal end fittings bonded into the tube. This configuration improves the load transfer into the end fittings and is more weight efficient than monolithic metallic arrangements. However, this technique is costly and the joint connection between the metal end fittings and the composite tube can be difficult to handle efficiently.

A variation of the composite wrapped tube may include integral composite end fittings. This variation addresses the problem of the load transition between the end fittings and the tube but adds further cost and fabrication complexity in joining the end fittings to the tube.

### Statements of Disclosure

According to a first aspect of the present disclosure there is provided a method of manufacturing a metal matrix composite component comprising the steps of:
providing a first tubular member having a first end and an opposite second end, the first end of the first tubular member being formed as a first end block;
positioning a metal matrix composite tubular member concentrically over the first tubular member;
positioning a second tubular member concentrically over the metal matrix composite tubular member, the second tubular member having a first end and an opposite second end, the second end of the second tubular member being formed as a second end block;
welding the first end of the first tubular member to the first end of the second tubular member, and the second end of the first tubular member to the second end of the second tubular member, to join the first tubular member to the second tubular member and thereby to form a metal matrix composite preform; and
consolidating the metal matrix composite preform by a hot isostatic pressing process to form the metal matrix composite component.

The method of the disclosure enables metal composite material to be included into a thrust strut like component whereby the transition between strong stiff composite material and unreinforced metal is managed in such a way as to optimise the stress and load carrying capabilities between the end fittings and the main strut to optimise component performance at optimum low weight.

The use of metal matrix composite material provides a weight advantage over the use of conventional metals and metal alloys.

Metal matrix composite materials are not susceptible to environmental effects such as, for example, water and other corrosive fluids, that may significantly degrade the performance of polymeric composite materials.

The use of a diffusion bonding process to consolidate the metal matrix composite preform to form the metal matrix composite component reduces the need for welding between the individual parts of the component. This improves the transition of stress resulting from applied end loads, into the metal matrix composite tubular component and results in a monolithic finished component that is structurally more efficient than prior art arrangements.

Optionally, the step of positioning a metal matrix composite tubular member concentrically over the first tubular member, comprises the steps of:
providing a metal matrix composite sheet preform;
rolling up the metal matrix composite sheet preform to form a metal matrix composite tubular member; and
positioning the metal matrix composite tubular member concentrically over the first tubular member.

The metal matrix composite preform provides the component with increased stiffness at reduced weight in comparison with a conventional metal component.

Optionally, the step of positioning a second tubular member concentrically over the metal matrix composite tubular member, the second tubular member having a first end and an opposite second end, comprises the additional subsequent steps of:
forming the first end block into a first end fitting; and
forming the second end block into a second end fitting.

The metal matrix composite tubular member requires end fittings in order to be able to transmit the structural load across the component.

After the first and second end fittings are formed in the corresponding first and second end blocks, the finished metal matrix component has a unitary construction. This makes the finished composite component stronger and structurally more efficient than the prior art arrangements.

Optionally, the metal matrix composite tubular member comprises finger portions, the finger portions extending axially from each of a first end of the metal matrix composite tubular member, and a second end of the metal matrix composite tubular member, the method comprising the additional step of:
wrapping respective ones of the finger portions around each of the first fitting and the second fitting.

Extending portions of the metal matrix composite tubular member across and around the ends of the end fittings improves the integrity of the metal matrix composite component. This improves the load transmission between the end fittings and the metal matrix composite tubular member which, in turn makes the finished component structurally more efficient than prior art arrangements.

Optionally, the steps of:
providing a metal matrix composite sheet preform; and
rolling up the metal matrix composite sheet preform to form a metal matrix composite tubular member,
comprise the steps of:
providing a metal matrix composite sheet; and
trimming at least one of two opposing edges to generate a scalloped edge profile, to create a metal matrix composite sheet preform;
rolling up the metal matrix composite sheet preform to form a metal matrix composite tubular member such that each scallop corresponds to a half circumference of the metal matrix composite tubular member.

The scalloped edge of the metal matrix composite preform provides for an extension of the material forming the metal matrix composite tubular member over respective ones of the end fittings. This further improves the transition of stress between the end fittings and the metal matrix composite tubular component.

Optionally, the steps of:
providing a metal matrix composite sheet preform; and
rolling up the metal matrix composite sheet preform to form a metal matrix composite tubular member,
comprise the steps of:
providing a metal matrix composite sheet; and
trimming at least one of two opposing edges to generate a stepped edge profile, to create a metal matrix composite sheet preform;
rolling up the metal matrix composite sheet preform to form a metal matrix composite tubular member such that a length of each step within the stepped edge profile corresponds to a circumference of the metal matrix composite tubular member, and the stepped edge profile provides a radially inwardly directed stepped cross-sectional profile in a direction distal to an end of the metal matrix composite tubular member.

The radially inwardly directed stepped cross-sectional profile resulting from the stepped edge profile of the metal matrix composite sheet preform provides for a measured stepwise transition of the stress concentration between the metal matrix composite tubular member and the respective end fitting.

Optionally, the steps of:
providing a metal matrix composite sheet preform; and
rolling up the metal matrix composite sheet preform to form a metal matrix composite tubular member,
comprise the steps of:
providing a metal matrix composite sheet; and
trimming at least one of two opposing edges to generate a stepped edge profile, to create a metal matrix composite sheet preform;
rolling up the metal matrix composite sheet preform to form a metal matrix composite tubular member such that a length of each step within the stepped edge profile corresponds to a circumference of the metal matrix composite tubular member, and the stepped edge profile provides a radially outwardly directed stepped cross-sectional profile in a direction distal to an end of the metal matrix composite tubular member.

The radially outwardly directed stepped cross-sectional profile resulting from the stepped edge profile of the metal matrix composite sheet preform provides for a measured stepwise transition of the stress concentration between the metal matrix composite tubular member and the respective end fitting.

Optionally, the steps of:
providing a metal matrix composite sheet preform; and
rolling up the metal matrix composite sheet preform to form a metal matrix composite tubular member,
comprise the steps of:
providing a metal matrix composite sheet; and
trimming at least one of two opposing edges to generate an angled edge profile, to create a metal matrix composite sheet preform;
rolling up the metal matrix composite sheet preform to form a metal matrix composite tubular member such that the angled edge profile provides a radially inwardly directed chamfer in a direction distal to an end of the metal matrix composite tubular member.

The radially inwardly directed chamfer resulting from the angled edge profile of the metal matrix composite sheet preform provides for a measured linear transition of the stress concentration between the metal matrix composite tubular member and the respective end fitting.

Optionally, the steps of:
providing a metal matrix composite sheet preform; and
rolling up the metal matrix composite sheet preform to form a metal matrix composite tubular member,
comprise the steps of:
providing a metal matrix composite sheet; and
trimming at least one of two opposing edges to generate an angled edge profile, to create a metal matrix composite sheet preform;
rolling up the metal matrix composite sheet preform to form a metal matrix composite tubular member such that the angled edge profile provides a radially outwardly directed chamfer in a direction distal to an end of the metal matrix composite tubular member.

The radially outwardly directed chamfer resulting from the angled edge profile of the metal matrix composite sheet preform provides for a measured linear transition of the stress concentration between the metal matrix composite tubular member and the respective end fitting.

According to a second aspect of the present disclosure there is provided a metal matrix composite component comprising:
a first tubular member, having a first end and an opposite second end, the first end being formed as a first end block;
a metal matrix composite tubular member; and
a second tubular member, having a first end and an opposite second end, the second end being formed as a second end block,
wherein the second tubular member is positioned concentrically over the metal matrix composite tubular member, and the metal matrix composite tubular member is positioned concentrically over the first tubular member,
the first end of the first tubular member is welded to the first end of the second tubular member, and the second end of the first tubular member is welded to the second end of the second tubular member, to join the first tubular member to the second tubular member, to form a metal matrix composite preform, the metal matrix composite preform being consolidated by a hot isostatic pressing process to form the metal matrix composite component.

The use of metal composite material into a thrust strut like component enables the transition between strong stiff composite material and unreinforced metal to be managed in such a way as to optimise the stress and load carrying capabilities between the end fittings and the main strut to optimise component performance at optimum low weight.

The use of metal matrix composite material provides a weight advantage over the use of conventional metals and metal alloys.

Metal matrix composite materials are not susceptible to environmental effects such as, for example, water and other corrosive fluids, that may significantly degrade the performance of polymeric composite materials.

The use of a diffusion bonding process to consolidate the metal matrix composite preform to form the metal matrix composite component reduces the need for welding between the individual parts of the component. This improves the transition of stress resulting from applied end loads into the metal matrix composite tubular component and results in a monolithic finished component that is structurally more efficient than prior art arrangements.

The metal matrix composite preform provides the component with increased stiffness at reduced weight in comparison with a conventional metal component.

Optionally, the metal matrix composite component further comprises a first end fitting and a second end fitting, wherein the first end block is formed as the first end fitting , and the second end block is formed as the second end fitting.

The metal matrix composite tubular member requires end fittings in order to be able to transmit the structural load across the component.

After the first and second end fittings are formed in the corresponding first and second end blocks, the finished metal matrix component has a unitary construction. This makes the finished composite component stronger and structurally more efficient than the prior art arrangements.

Optionally, each of the first end fitting and the second end fitting is selected from the group comprising clevises, lugs and eyes.

In one arrangement, the first end fitting and the second end fitting are formed as clevis fittings.

In other arrangements, either or both of the first and second fittings may be a lug fitting or an eye fitting, or an alternative form of mechanical load transmission fitting.

Optionally, a cross-sectional profile of each of the first tubular member, the composite tubular member, and the second tubular member is selected from the group comprising circular, elliptical and rectilinear profiles.

In one arrangement of the disclosure, each of the first tubular member, the composite tubular member, and the second tubular member are formed with co-operating circular cross-sectional profiles.

Alternatively, each of the first tubular member, the composite tubular member, and the second tubular member may be formed with co-operating square or ectangular cross-sectional profiles, or other co-operating cross-sectional profiles.

Optionally, the metal matrix composite tubular member comprises finger portions, the finger portions extending axially from each of the first end and the second end, and respective ones of the finger portions are wrapped around each of the first end fitting and the second end fitting.

Extending portions of the metal matrix composite tubular member across and around the ends of the end fittings improves the integrity of the metal matrix composite component. This improves the load transmission between the end fittings and the metal matrix composite tubular member which, in turn makes the finished component structurally more efficient than in prior art arrangements.

Optionally, the metal matrix composite tubular member is formed from a metal matrix composite sheet preform, the metal matrix composite sheet preform having at least one of two opposing edges provided with a scalloped edge profile, the metal matrix composite sheet preform being rolled up to form the metal matrix composite tubular member, with each scallop corresponding to a half circumference of the metal matrix composite tubular member.

The scalloped edge of the metal matrix composite preform provides for an extension of the material forming the metal matrix composite tubular member over respective ones of the end fittings. This further improves the transition of stress between the end fittings and the metal matrix composite tubular component.

Optionally, the metal matrix composite tubular member is formed from a metal matrix composite sheet preform, the metal matrix composite sheet preform having at least one of two opposing edges provided with a stepped edge profile, the metal matrix composite sheet preform being rolled up to form the metal matrix composite tubular member, a length of each step within the stepped edge profile corresponds to a circumference of the metal matrix composite tubular member, and the stepped edge profile provides a radially inwardly directed stepped cross-sectional profile in a direction distal to an end of the metal matrix composite tubular member.

The radially inwardly directed stepped cross-sectional profile resulting from the stepped edge profile of the metal matrix composite sheet preform, provides for measured stepwise transition of the stress concentration between the metal matrix composite tubular member and the respective end fitting.

Optionally, the metal matrix composite tubular member is formed from a metal matrix composite sheet preform, the metal matrix composite sheet preform having at least one of two opposing edges provided with a stepped edge profile, the metal matrix composite sheet preform being rolled up to form the metal matrix composite tubular member, a length of each step within the stepped edge profile corresponds to a circumference of the metal matrix composite tubular member, and the stepped edge profile provides a radially outwardly directed stepped cross-sectional profile in a direction distal to an end of the metal matrix composite tubular member.

The radially outwardly directed stepped cross-sectional profile resulting from the stepped edge profile of the metal matrix composite sheet preform, provides for measured stepwise transition of the stress concentration between the metal matrix composite tubular member and the respective end fitting.

Optionally, the metal matrix composite tubular member is formed from a metal matrix composite sheet preform, the metal matrix composite sheet preform having at least one of two opposing edges provided with an angled edge profile, the metal matrix composite sheet preform being rolled up to form the metal matrix composite tubular member, and the angled edge profile provides a radially inwardly directed chamfer in a direction distal to an end of the metal matrix composite tubular member.

The radially inwardly directed chamfer resulting from the angled edge profile of the metal matrix composite sheet preform provides for measured linear transition of the stress concentration between the metal matrix composite tubular member and the respective end fitting.

Optionally, the metal matrix composite tubular member is formed from a metal matrix composite sheet preform, the metal matrix composite sheet preform having at least one of two opposing edges provided with an angled edge profile, the metal matrix composite sheet preform being rolled up to form the metal matrix composite tubular member, and the angled edge profile provides a radially outwardly directed chamfer in a direction distal to an end of the metal matrix composite tubular member.

The radially outwardly directed chamfer resulting from the angled edge profile of the metal matrix composite sheet preform provides for measured linear transition of the stress concentration between the metal matrix composite tubular member and the respective end fitting.

According to a third aspect of the present disclosure there is provided a thrust strut formed by the method of the first aspect of the disclosure.

According to a fourth aspect of the present disclosure there is provided a thrust strut comprising a metal matrix composite component according to the second aspect of the disclosure.

According to a fifth aspect of the present disclosure there is provided an outlet guide vane for a gas turbine engine, formed by the method of the first aspect of the disclosure.

According to a sixth aspect of the present disclosure there is provided an outlet guide vane for a gas turbine engine, comprising a metal matrix composite component according to the second aspect of the disclosure.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic elevational view of a metal matrix component according to a first embodiment of the disclosure, in the form of a thrust strut;
Figure 2 shows a schematic perspective view of the method of assembling the thrust strut of Figure 1;
Figure 3 shows a schematic perspective partial view of a selection of end fitting arrangements of the thrust strut of Figure 1;
Figure 4 shows a schematic view of the assembly of a composite sheet preform used in the thrust strut of Figure 1;
Figure 5 shows an alternative arrangement for the composite sheet preform of Figure 4;
Figures 6A to 6C show a further alternative arrangement for the composite sheet preform of Figure 4;
Figures 7A to 7C show a further alternative arrangement for the composite sheet preform of Figure 4;
Figure 8 shows a schematic sectional view of a metal matrix component according to a second embodiment of the disclosure, in the form of a hollow flanged shaft; and
Figure 9 shows a schematic perspective view of a metal matrix component according to a third embodiment of the disclosure, in the form of a nozzle guide vane for a gas turbine turbofan engine.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

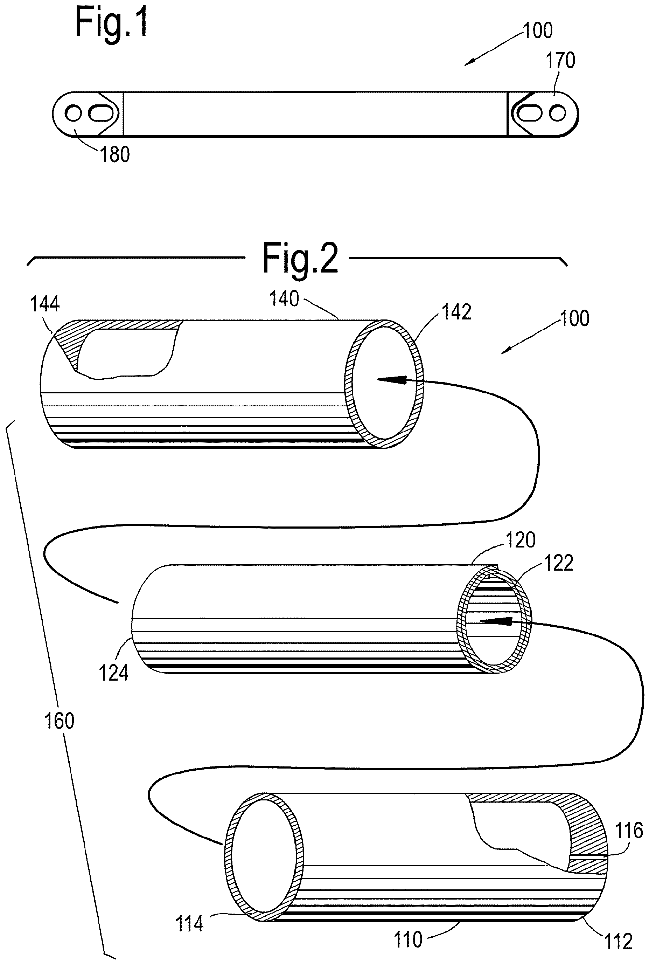

Referring to Figures 1 and 2, a metal matrix composite component according to an embodiment of the disclosure is designated generally by the reference numeral 100.

The metal matrix composite component 100 comprises a first tubular member 110, a metal matrix composite tubular member 120, and a second tubular member 140.

The first tubular member 110 has a first end 112 and an opposite second end 114. The first end 112 of the first tubular member 110 is formed as a first end block 112. The first end 112 of the first tubular member 110 is provided with an evacuation hole 116. The evacuation hole 116 provides for fluid communication between the hollow interior of the first tubular member 110 and the exterior of the first tubular member 110.

The metal matrix composite tubular member 120 has a first end 122 and an opposite second end 124.

The second tubular member 140 has a first end 142 and an opposite second end 144. The second end 144 of the second tubular member 140 is formed as a second end block 144.

In the present embodiment, each of the first tubular member 110 and the second tubular member 140 is formed from a titanium alloy. In alternative arrangements, the first tubular member 110 and/or the second tubular member 140 may be formed from another metal or metal alloy.

In the present arrangement, the metal matrix composite tubular member 120 is formed from a titanium metal matrix composite material. In other arrangements, the metal matrix composite tubular member 120 may be formed from an alternative metal matrix composite material.

The metal matrix composite tubular member 120 is positioned concentrically over the first tubular member 110.

The second tubular member 140 is positioned concentrically over the metal matrix composite tubular member 120.

The first end 112 of the first tubular member 110 is welded to the first end 142 of the second tubular member 140. The second end 114 of the first tubular member 110 is welded to the second end 144 of the second tubular member 140. The welding of the first tubular member 110 to the second tubular member 140 encapsulates the metal matrix composite tubular member 120 between the first tubular member 110 and the second tubular member 140. These welding operations extend only over the first tubular member 110 and the second tubular member 140, and there is no welding of the metal matrix composite tubular member 120.

In this way, the first tubular member 110 is joined to the second tubular member 140, with the metal matrix composite tubular member 120 positioned therebetween, to form a metal matrix composite preform 160.

The first end block 112 is then machined to form a first end fitting 170.

The second end block 142 is then machined to form a second end fitting 180.

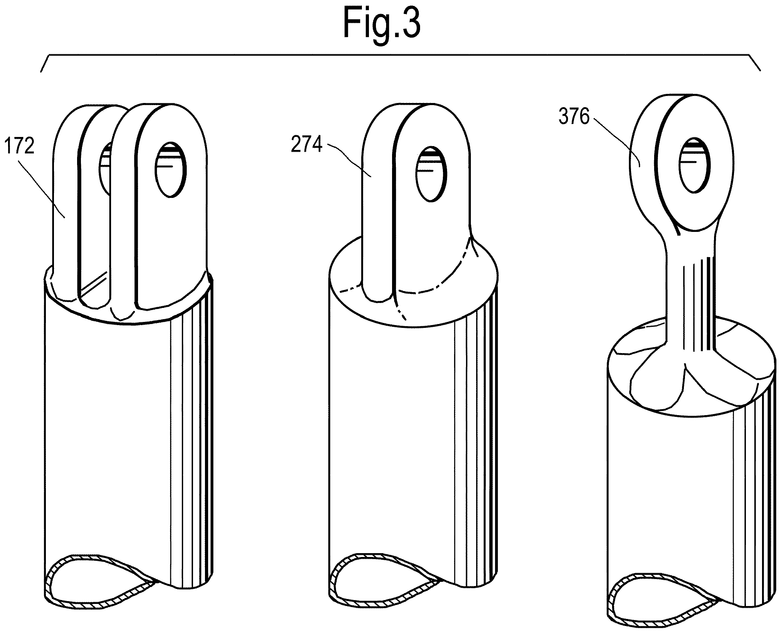

In the present arrangement, the first end fitting 170 and the second end fitting 180 are each formed as a clevis 172, as illustrated in the left hand image in Figure 3.

Alternatively, either or both of the first end fitting 170 and the second end fitting 180 may be formed as a lug 274, shown in the central image of Figure 3, or an eye 376, shown in the right hand image in Figure 3.

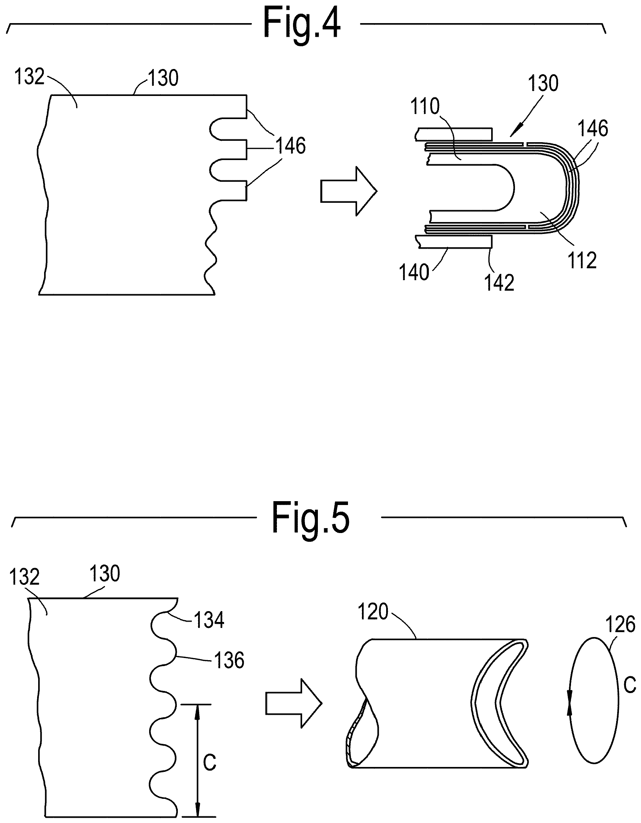

As illustrated in Figures 4 to 7, the metal matrix composite tubular member 120 is formed from a metal matrix composite sheet preform 130.

The metal matrix composite sheet preform 130 is itself formed from a flat sheet of a metal matrix composite material. As mentioned above, the embodiment of the disclosure this metal matrix composite material is a titanium metal matrix composite material.

In the embodiment of the disclosure, the metal matrix composite sheet preform 130 is formed as a rectilinear panel of metal matrix composite material. This panel is then rolled up to form the metal matrix composite tubular member 120.

In an alternative embodiment of the disclosure, shown in Figure 4, the metal matrix composite tubular member 120 comprises finger portions 146. Each of the finger portions 146 extends axially from each of the first end 122 and the second end 124.

As shown in Figure 4, after the first tubular member, the metal matrix composite tubular member, and the second tubular member have been assembled as previously described, respective ones of the finger portions 146 are wrapped around each of the first end fitting 170 and the second end fitting 180.

In a further alternative embodiment of the disclosure, the metal matrix composite sheet preform 130 is formed as a rectilinear panel of metal matrix composite material, in which at least one of two opposing edges 134 is trimmed to generate a scalloped edge profile 136.

The metal matrix composite sheet preform 130 is then rolled up to form a metal matrix composite tubular member 120 such that each scallop corresponds to a half circumference 126 of the metal matrix composite tubular member 120.

The scalloped edge profile 136 (shown in Figure 5) of the metal matrix composite tubular member 120 extends partially over the first and/or second end fitting 170,180 and improves the load transmission between the end fittings 170,180 and the metal matrix composite preform 160.

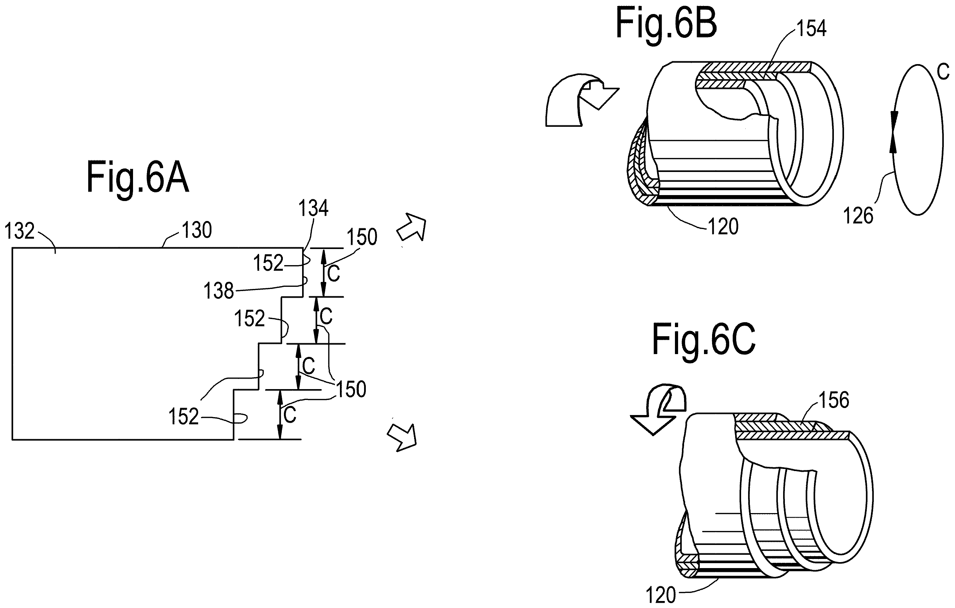

As shown in Figures 6A to 6C, in a further alternative embodiment of the disclosure, the metal matrix composite sheet preform 130 is formed as a rectilinear panel of metal matrix composite material, in which at least one of two opposing edges 134 is trimmed to generate a stepped edge profile 138.

The metal matrix composite sheet preform 130 is then rolled up to form a metal matrix composite tubular member 120 such that a length 150 of each step 152 within the stepped edge profile 138 corresponds to a circumference 126 of the metal matrix composite tubular member 120. The stepped edge profile 138 provides a radially inwardly directed stepped cross-sectional profile 154 (shown in Figure 6B) in a direction distal to an end of the metal matrix composite tubular member 120.

Alternatively, the metal matrix composite sheet preform 130 with the stepped edge profile 138 may be rolled up in an opposite sense. This provides a radially outwardly directed stepped cross-sectional profile 156 (shown in Figure 6C) in a direction distal to an end of the metal matrix composite tubular member 120.

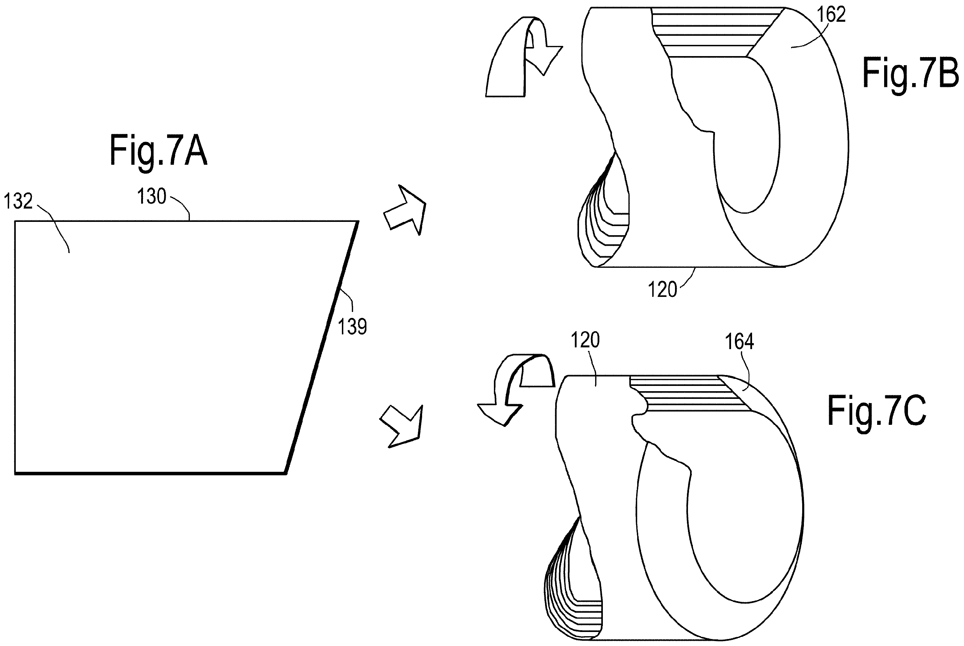

Figures 7A to 7C show a further alternative embodiment of the disclosure, the metal matrix composite sheet preform 130 is formed as a rectilinear panel of metal matrix composite material, in which at least one of two opposing edges 134 is trimmed to generate an angled edge profile 139.

In this further alternative, the metal matrix composite sheet preform 130 is then rolled up to form a metal matrix composite tubular member 120 such that the angled edge profile 139 provides a radially inwardly directed chamfer 162 (shown in Figure 7B) in a direction distal to an end of the metal matrix composite tubular member 120.

The metal matrix composite sheet preform 130 with the angled edge profile 139 may be rolled up in an opposite sense. This provides a radially outwardly directed chamfer 164 (shown in Figure 7C) in a direction distal to an end of the metal matrix composite tubular member 120.

After the first tubular member 110, the metal matrix composite tubular member 120, and the second tubular member 140 have been assembled as described above, the metal matrix composite preform 160 is consolidated. The evacuation hole 116 is used to create a vacuum in the interior of the assembled metal matrix composite preform 160.

A conventional hot isostatic pressing process is used to consolidate the metal matrix composite preform 160 to form the metal matrix composite component 100.

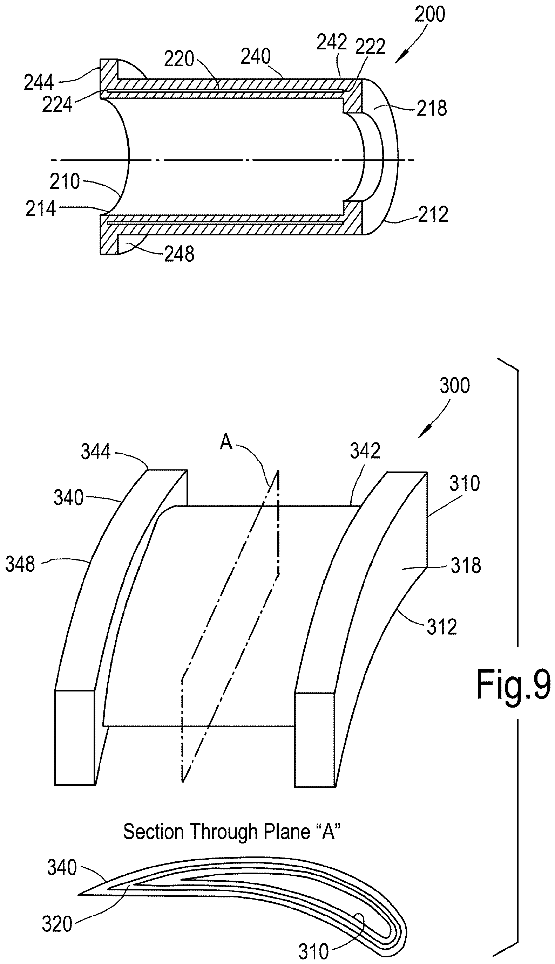

Referring to Figure 8, a metal matrix composite component according to a second embodiment of the disclosure is designated generally by the reference numeral 200. Features of the composite component 200 which correspond to those of the composite component 100 have been given corresponding reference numerals for ease of reference.

The composite component 200 is formed as an elongate tubular drive shaft 200 having a flange at each end. The composite component 200 comprises a first tubular member 210, a metal matrix composite tubular member 220, and a second tubular member 240.

The first tubular member 210 has a first end 212 and a second end 214. The first end 212of the first tubular member 210 is formed as a first flange 218. The metal matrix composite tubular member 220 has a first end 222 and a second end 224. The second tubular member 240 has a first end 242 and a second end 244. The second end 244 of the second tubular member 240 is formed as a second flange 248.

The composite component 200 is assembled and consolidated in exactly the same way as that described above in relation to the composite component 100 of the first embodiment of the disclosure.

Referring to Figure 9, a metal matrix composite component according to a third embodiment of the disclosure is designated generally by the reference numeral 300. Features of the composite component 300 which correspond to those of the composite component 100 have been given corresponding reference numerals for ease of reference.

The composite component 300 is formed as nozzle guide vane 300 for a gas turbine turbofan engine. The composite component 300 comprises a first tubular member 310, a metal matrix composite tubular member 320, and a second tubular member 340.

The first tubular member 310 has a first end 312 and a second end 314. The first end 312of the first tubular member 310 is formed as a first platform 318. The metal matrix composite tubular member 320 has a first end 322 and a second end 324. The second tubular member 340 has a first end 342 and a second end 344. The second end 344 of the second tubular member 340 is formed as a second platform 348.

The composite component 300 is assembled and consolidated in exactly the same way as that described above in relation to the composite component 100 of the first embodiment of the disclosure.

While the method of the disclosure and the resulting component have been described with reference to a various components of an aerospace gas turbine engine, the method and the resulting component may be equally applied to any structural strut-like component.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A method of manufacturing a metal matrix composite component (100) comprising the steps of:
providing a first tubular member (110) having a first end (112) and an opposite second end (114), the first end (112) of the first tubular member (110) being formed as a first end block ;
positioning a metal matrix composite tubular member (120) concentrically over the first tubular member (110);
positioning a second tubular member (140) concentrically over the metal matrix composite tubular member (120), the second tubular member (140) having a first end (142) and an opposite second end (144), the second end (144) of the second tubular member (140) being formed as a second end block;
welding the first end (112) of the first tubular member (110) to the first end (142) of the second tubular member (140), and the second end (114) of the first tubular member (110) to the second end (144) of the second tubular member (140), to join the first tubular member (110) to the second tubular member (140) and thereby to form a metal matrix composite preform (160); and
consolidating the metal matrix composite preform (160) by a hot isostatic pressing process to form the metal matrix composite component (100).

2. The method as claimed in Claim 1, wherein the step of positioning a metal matrix composite tubular member (120) concentrically over the first tubular member (110), comprises the steps of:
providing a metal matrix composite sheet preform (130);
rolling up the metal matrix composite sheet preform (130) to form a metal matrix composite tubular member (120); and
positioning the metal matrix composite tubular member (120) concentrically over the first tubular member (110).

3. The method as claimed in Claim 1 or Claim 2, wherein the step of positioning a second tubular member (140) concentrically over the metal matrix composite tubular member (120), the second tubular member (140) having a first end (142) and an opposite second end (144), comprises the additional subsequent steps of:
forming the first end block into a first end fitting (170); and
forming the second end block into a second end fitting (180).

4. The method as claimed in Claim 3, wherein the metal matrix composite tubular member (120) comprises finger portions (146), the finger portions (146) extending axially from each of the first end (122) and the second end (124), the method comprising the additional step of:
wrapping respective ones of the finger portions (146) around each of the first end fitting (170) and the second end fitting (100).

5. The method as claimed in any one of Claims 2 to 4, wherein the steps of:
providing a metal matrix composite sheet preform (130); and
rolling up the metal matrix composite sheet preform (130) to form a metal matrix composite tubular member (120),
comprise the steps of:
providing a metal matrix composite sheet (132); and
trimming at least one of two opposing edges (134) to generate a scalloped edge profile (136), to create a metal matrix composite sheet preform (130);
rolling up the metal matrix composite sheet preform (130) to form a metal matrix composite tubular member (120) such that each scallop corresponds to a half circumference of the metal matrix composite tubular member (120).

6. The method as claimed in any one of Claims 2 to 4, wherein the steps of:
providing a metal matrix composite sheet preform (130); and
rolling up the metal matrix composite sheet preform (130) to form a metal matrix composite tubular member (120),
comprise the steps of:
providing a metal matrix composite sheet (132); and
trimming at least one of two opposing edges (134) to generate a stepped edge profile (138), to create a metal matrix composite sheet preform (130);
rolling up the metal matrix composite sheet preform (130) to form a metal matrix composite tubular member (120) such that a length (150) of each step (152) within the stepped edge profile (138) corresponds to a circumference of the metal matrix composite tubular member (120), and the stepped edge profile (138) provides a radially inwardly directed stepped cross-sectional profile (154) in a direction distal to an end of the metal matrix composite tubular member (120).

7. The method as claimed in any one of Claims 2 to 4, wherein the steps of:
providing a metal matrix composite sheet preform (130); and
rolling up the metal matrix composite sheet preform (130) to form a metal matrix composite tubular member (120)
comprise the steps of:
providing a metal matrix composite sheet (132); and
trimming at least one of two opposing edges (134) to generate a stepped edge profile (138), to create a metal matrix composite sheet preform (130);
rolling up the metal matrix composite sheet preform (130) to form a metal matrix composite tubular member (120) such that a length (150) of each step (152) within the stepped edge profile (138) corresponds to a circumference of the metal matrix composite tubular member (120), and the stepped edge profile (138) provides a radially outwardly directed stepped cross-sectional profile (156) in a direction distal to an end of the metal matrix composite tubular member (120).

8. The method as claimed in any one of Claims 2 to 4, wherein the steps of:
providing a metal matrix composite sheet preform (130); and
rolling up the metal matrix composite sheet preform (130) to form a metal matrix composite tubular member (120),
comprise the steps of:
providing a metal matrix composite sheet (132); and
trimming at least one of two opposing edges (134) to generate an angled edge profile (139), to create a metal matrix composite sheet preform (130);
rolling up the metal matrix composite sheet preform (130) to form a metal matrix composite tubular member (120) such that the angled edge profile (139) provides a radially inwardly directed chamfer (162) in a direction distal to an end of the metal matrix composite tubular member (120).

9. The method as claimed in any one of Claims 2 to 4, wherein the steps of:
providing a metal matrix composite sheet preform (130); and
rolling up the metal matrix composite sheet preform (130) to form a metal matrix composite tubular member (120),
comprise the steps of:
providing a metal matrix composite sheet (132); and
trimming at least one of two opposing edges (134) to generate an angled edge profile (139), to create a metal matrix composite sheet preform (130);
rolling up the metal matrix composite sheet preform (130) to form a metal matrix composite tubular member (120) such that the angled edge profile (139) provides a radially outwardly directed chamfer (164) in a direction distal to an end of the metal matrix composite tubular member (120).

10. A metal matrix composite component (100) comprising:
a first tubular member (110), having a first end (112) and an opposite second end (114), the first end (112) being formed as a first end block;
a metal matrix composite tubular member (120); and
a second tubular member (140), having a first end (142) and an opposite second end (144), the second end (144) being formed as a second end block, wherein the second tubular member (140) is positioned concentrically over the metal matrix composite tubular member (120), and the metal matrix composite tubular member (120) is positioned concentrically over the first tubular member (110),
the first end (112) of the first tubular member (110) is welded to the first end (142) of the second tubular member (140), and the second end (114) of the first tubular member (110) is welded to the second end (144) of the second tubular member (140), to join the first tubular member (110) to the second tubular member (140), to form a metal matrix composite preform (160), the metal matrix composite preform (160) being consolidated by a hot isostatic pressing process to form the metal matrix composite component (100).

11. The metal matrix composite component (100) as claimed in Claim 10, further comprising a first end fitting (170) and a second end fitting (180), wherein the first end block is formed as the first end fitting (170), and the second end block is formed as the second end fitting (180).

12. The metal matrix composite component (100) as claimed in Claim 11, wherein the metal matrix composite tubular member (120) comprises finger portions (146), the finger portions (146) extending axially from each of the first end (122) and the second end (124), and respective ones of the finger portions (146) are wrapped around each of the first end fitting (170) and the second end fitting (180).

13. The metal matrix composite component (100) as claimed in Claim 11 or Claim 12, wherein the metal matrix composite tubular member (120) is formed from a metal matrix composite sheet preform (130), the metal matrix composite sheet preform (130) having at least one of two opposing edges (134) provided with a scalloped edge profile (136), the metal matrix composite sheet preform (130) being rolled up to form the metal matrix composite tubular member (120), with each scallop corresponding to a half circumference of the metal matrix composite tubular member (120).

14. The metal matrix composite component (100) as claimed in any one of Claims 11 to 14, wherein the metal matrix composite tubular member (120) is formed from a metal matrix composite sheet preform (130), the metal matrix composite sheet preform (130) having at least one of two opposing edges (134) provided with a stepped edge profile (138), the metal matrix composite sheet preform (130) being rolled up to form the metal matrix composite tubular member (120), a length (152) of each step (150) within the stepped edge profile (138) corresponds to a circumference of the metal matrix composite tubular member (120), and the stepped edge profile (138) provides a radially inwardly directed stepped cross-sectional profile (154) in a direction distal to an end of the metal matrix composite tubular member (120).

15. The metal matrix composite component (100) as claimed in any one of Claims 11 to 14, wherein the metal matrix composite tubular member (120) is formed from a metal matrix composite sheet preform (130), the metal matrix composite sheet preform (130) having at least one of two opposing edges (134) provided with a stepped edge profile (138), the metal matrix composite sheet preform (130) being rolled up to form the metal matrix composite tubular member (120), a length (152) of each step (150) within the stepped edge profile (138) corresponds to a circumference of the metal matrix composite tubular member (120), and the stepped edge profile (138) provides a radially outwardly directed stepped cross-sectional profile (156) in a direction distal to an end of the metal matrix composite tubular member (120).
